# EUROPEAN PATENT APPLICATION

(11) **EP 1 785 964 A1**
(43) Date of publication of application: **16.05.2007**
(21) Application number: 05021481.6
(22) Date of filing: 30.09.2005
(51) Int. Cl.: G08B 25/01, B60R 25/10

(54) **Automotive vehicle panic alarm system for thwarting an attack, and method of same**

(30) Priority: 06.12.2004 US 633584
(71) Applicant: Spark, Alan G., Pinner Middlesex HA5 2PJ (GB)
(72) Inventor: Spark, Alan G., Pinner Middlesex HA5 2PJ (GB)
(74) Representative: W.P. Thompson & Co.

(57) **Abstract**

A panic alarm system is provided for installation in a motor vehicle, the system aiding in thwarting criminal attacks against vehicle occupants as well as car hijacking of an occupied vehicle. The system triggerable by occupant use of activation switches in multiple vehicle locations, or via occupant speaking a programmed voice alarm activation phrase, or alternately remotely activated from a mobile cellular device within limited close range of the vehicle. The system designed to take advantage of government mandated national emergency call systems such as the FCC's Enhanced 911 system and provide vehicle location to emergency call dispatchers using features of E911, or GPS global coordinates. Advantageously capturing video images to a removable flash memory card as an aid to later identification and conviction of assailant. Once the alarm is activated, the alarm can be disabled by correctly entering a secured disabling code into an alarm deactivation keypad.

## Description

### CROSS REFERENCE TO RELATED APPLICATIONS

This application claims priority to co-pending United Stated Provisional Patent Application having Serial No. 60/633,584 filed December 6, 2004 entitled "Spark Alarm", having a common applicant herewith.

### FIELD OF THE DISCLOSURE

The disclosures made herein relate generally to the field of automotive vehicle security alarm systems and more particularly, to a an electronic vehicle security panic alarm systems incorporating audio, visual and telecommunications methods for summoning assistance from those nearby, deterring assaults on the driver, and notify authorities when a drivers personal safety is threatened by an attacker or crime in progress and providing authorities with location of the vehicle under attack.

### BACKGROUND

It is a reality when operating a motor vehicle that a vehicle driver or the occupant needs to take personal safety precautions, especially when operating or occupying their vehicle alone or at night. Car thieves will sometimes approach a motor vehicle, threaten to assault the driver or to forcibly steal or 'car jack' the car. This is particularly of concern when the driver is alone at night, or has characteristics, behaviors or physical attributes that may identify the individual to a would-be assailant as being weaker, as an easy target, and therefore vulnerable to attack. Examples of characteristics may include youth and inexperience, a physical handicap, being short in stature, or all too often with sex crimes- being female and alone is enough.

When faced with such a threat, the first concern of the car owner or driver is to call attention to and thereby deter the attacker, and to summon help from the police authorities and those of the public nearby who may be readily positioned to come to the aid of the victim.

There is a need for a vehicle panic alarm system that, by calling attention to the attacker and summoning help, works to deter and abort an attack, causing the attacker to comprehend that they would personally benefit by getting away quickly while they can and seek an easier target to attack.

Additionally, there is a need for an alarm system that would be of useful assistance when a vehicle driver is unwell and in need of medical attention. Such an alarm system would notify emergency call dispatchers, police and family of an emergency and provide vehicle location coordinates to authorities.

With the increasing development of areas surrounding major cities, and the increasing traffic congestion and delays on road and highways, commuters are increasingly exposed to incidents of road rage. There is a need for a vehicle alarm system that would draw attention to the attack an the attacker, as well as notify authorities. By discouraging the attack, such an alarm may be expected to reduce assaults and injuries and to save lives.

Conventional approaches to a vehicle alarm system include systems that activate the car horn and/ or flash the lights when a vehicle intrusion is detected, say by door switch, ignition on, or vehicle motion sensors.

One limitation of such conventional vehicle security systems is that they usually do not have a means for the driver to readily trigger the alarm when the driver is personally threatened, for example with a carjacking, assault or threatened rape.

Another limitation of conventional vehicle alarm systems is that they can usually be deactivated easily within the car, even by the attacker.

Yet another limitation of conventional vehicle alarm systems is that they do not provide a means to notify authorities and provide the vehicle location to authorities, thereby enabling police to dispatch directly to the crime scene, abort the attack or render assistance.

Still another limitation of conventional vehicle alarm systems is that they do not provide separate outputs for addition additional security accessories such as a high DBA noise level siren. While a siren can be connected to the vehicle horn output, activating the siren whenever the vehicle horn is actuated would be confusing to other drivers and therefore highly undesirable in traffic.

Another limitation of conventional vehicle alarm systems is that they are intended as vehicle theft rather than a driver security panic alarm systems, as such they do not address the personal security and safety concerns of the driver. A conventional vehicle alarm may activate the vehicle horn and disable the vehicle ignition system at the time of the theft or incident detection. Disabling the vehicle during a forcible attack in the presence of the vehicle owner or occupant can be dangerous as it prolongs the face-to-face assault between the attacker and the victim by preventing the driver from operating the vehicle to escape the attack. An alarm system that disables the vehicle during a forcible robbery in the presence of a car owner or operator prolongs contact between the car owner and thief allows the thief to direct violence against the car owner.

Therefore, there a vehicle panic alarm system that overcomes limitations associated with such conventional vehicle security systems would be useful and novel.

### SUMMARY OF THE DISCLOSURE

Accordingly, embodiments of the inventive disclosures made herein comprise a vehicle panic alarm system which aids a vehicle driver in thwarting an attack by calling attention to the attacker by use of bright visual lighting and a variety of loud audible means. Certain embodiments of the panic alarm system disclosed herein may additionally be configured to automatically wirelessly contact authorities over a cellular network, relay vehicle coordinates to and summon help from police, authorities, security guards and family.

In one embodiment, a vehicle panic alarm system comprises a control box containing a circuit board having relays, drivers, electronic logic devices, as well as other active and passive electronic components. The panic alarm circuitry is provided with power supply connections to derive power from the vehicle's battery. The panic alarm system includes wiring connections for inputs from one or more alarm activation switches, and digital signal level inputs from an alarm condition cancellation code input keypad. The alarm circuit provides connection points for wiring outputs to vehicle courtesy or marker lights, vehicle headlamps, the vehicle's horn relay (normal interface device for actuating the car horn), optional panic alarm lights or spotlights mounted to the exterior of the vehicle, and for activating an optional siren. It is known that people are becoming accustomed to encountering parked vehicles having accidentally tripped alarm systems. This happens with sufficient frequency that people become accustomed to such alarms and tend to continue on their way and ignore such systems. Conventional alarm systems such as those use a repeating periodic on/off sequence of the horn and vehicle lights, a sequence that is obviously mechanically generated and does not indicate a human in distress, but rather just another obnoxious noisy parked car with a faulty alarm. A vehicle alarm system in accordance with the inventive disclosure provided herein instead uses a pseudo random non regular off/ on cycling sequence which draws attention of nearby observers by appearing to be operated by human action, such as a person desperately summoning help, rather than by regularly timed mechanical means as in conventional alarms. By this design the alarm outputs such as horn, siren, and vehicle lights are flashed off and on in a pseudo random varying pattern to make the alarm stand out to an onlooker and to make it a more compelling object to attract attention to the attacker or the vehicle, a pattern that an onlooker might assume to be the result of human seeking to draw attention rather than the dull and often observed regularly timed twitches of an automated mindless apparatus as in conventional vehicle alarms.

A second embodiment includes the features of the first embodiment and further comprises emergency services notification outputs to an integrated or alternately externally interfaced GSM cellular device module providing cellular phone network access. This second embodiment is designed to take full advantage of national emergency call systems, such as (in the example of the United States) the Federal Communications Commission's (FCC) Enhanced 911 (E911) standard as being implemented in the United States. The wireless Enhanced 911 (E911) rules seek to improve the effectiveness and reliability of wireless 911 service by providing 911 dispatchers with additional information on wireless 911 calls. The witeless E911 program is divided into two parts - Phase I and Phase II. Phase I requires carriers, upon appropriate request by a local Public Safety Answering Point (PSAP, ie: the local 911 call receiving agency), to report the telephone number of a wireless 911 caller and the location of the cellular network receiving antenna that received the call, thereby placing the vehicle location within the range of a given cellular tower. Phase II requires wireless carriers to provide far more precise location information, within 50 to 300 meters in most cases, usually locating the caller (the vehicle alarm system in this case) to an urban city block, or in the country to a rural street or crossroad location. The deployment of E911 requires the development of new technologies and upgrades to local 911 PSAPs, as well as coordination among public safety agencies, wireless carriers, technology vendors, equipment manufacturers, and local wireline carriers. In the United States, the FCC established a four-year rollout schedule for Phase II, beginning October 1, 2001 and to be completed by December 31, 2005. Another key feature which the alarm system of the present inventive disclosure uses to advantage is the requirement that wireless cellular service providers are required to provide service to, to carry and to complete emergency 911 calls originated from cellular phones, even if the cellular phone does not subscribe to cellular service with the receiving provider or even any cellular provider. This requirement makes it possible for a vehicle alarm system as disclosed herein to incorporate and utilize cellular telephone network compatible equipment to originate emergency calls without requiring the alarm system owner to subscribe to or pay for cellular service to support the emergency calling and vehicle location features of the United States Enhanced 911 service, as well as in other countries which are mandating similar emergency cellular services.

In a third embodiment the vehicle panic alarm system comprises the elements of the first and second embodiments, and further comprises a Global Positioning System (GPS) receiver configured to receive signals from the United States government's Global Positioning System (GPS) satellites or other similar global position locating systems, interpreting the satellite signals to calculate the vehicle location in global coordinates and provide vehicle location coordinates to the panic alarm system. The system further includes emergency services notification outputs to an integrated or alternately externally interfaced GSM cellular device module providing cellular phone network access. The panic alarm system providing the vehicle's global coordinates to emergency services using voice synthesis technology to speak the vehicle coordinates in a synthesized human voice during automatically dialed and executed emergency cellular telephone notification phone calls to authorities

In the second and third embodiments, the emergency notification outputs providing automated dialing of stored cellular numbers for configured police and security authorities, as well as synthesized human voice message generation using digital to analog conversion (DAC) circuitry and software to transform the stored emergency message into a natural human voice signal for transmission over a cellular network, thereby informing the call recipient of an emergency condition or assault in progress, and providing the vehicle location in global coordinates as read by the GPS receiver. Such DAC circuitry and software is widely used in computers for recorded audio playback, as well as in portable digital music players. Several industry standard digital voice data storage formats are in common use for voice recording and playback, standard voice data storage formats such as Microsoft's WMA used in the Windows operating system, common MP3 formats used in digital audio players, and the DSS (Digital Speech Standard) technology used by various commonly available voice recording and playback devices. To facilitate the recording of the emergency message into memory, the panic alarm system includes a microphone built into the code cancellation input keypad interfaced into analog to digital conversion and voice data storage software to store the voice image into non-volatile memory in the panic alarm system. As the encoded and stored voice message needs to be only slightly better than phone voice channel quality, the audio bit sampling rates can be reduced to, for example, 48K bits per second and thereby reducing the memory size required to store the message. Stored number can be dialed by the alarm system using an attached or integrated cellular telephone device by generating tones compliant with the dual-tone multi-frequency (DTMF) telephone equipment standard. In the DTMF standard, low frequency and high frequency sinusoidal audio frequency pairs are generated, one pair corresponding to a phone keypad key pressed, and transmitted over the cellular network. These tones are then interpreted by the switching center on the receiving end of the cellular wireless link. These dialing tones can be generated using the DAC circuitry discussed above, as well as by use of other well known electronic tone generation and oscillator circuits as are commonly applied in phone handsets.

The second and third embodiments can further compromise one or more digital camera units provided within the vehicle. The digital cameras comprise low cost charge couple device (CCD) cameras, as are commonly applied in camera equipped cellular telephone phones, or similar devices. Ideal CCD imaging camers are small in size, inexpensive and provide medium resolution images. As the cameras are small in size, they may be easily concealed, for example, behind the mirror surface of the vehicle rear view mirror mounted near the windshield. As the camera typically has a shallow depth, the mirror rear housing can be easily adapted to enclose the CCD camera. One envisioned configuration utilizes 3 cameras, one generally aimed at the driver seat as well as out the driver window, one generally aimed at the passenger seat, and one generally aimed towards the rear seat of the vehicle. As envisioned, these cameras would have a fixed, non adjustable mounting, hidden inside the vehicle rear view mirror housing and located behind the mirrored glass surface of the rear view mirror, the mirrored glass surface providing a one-way light transmission scheme whereby the camera can see out into the vehicle, but wherein due to low lighting interior to the mirror housing, a vehicle occupant is unable to see through the mirror and observe the cameras located inside the rear view mirror. The alarm system is configured so that in an alarm condition the cameras periodically capture pictures of the drivers and vehicle occupants, store the pictures to a hidden local flash memory card or MMC (multimedia memory card, technology similar to as used in digital cameras), or SD card (Secure Digital memory cad), and optionally transmit the pictures over the wireless network to a user configured set (one or more) of cellular numbers using cellular GSM multi media messaging capabilities. The MMC or SD card is removable and designed to hold a graphic record of the attack in a digital picture format, such as TIFF or JPEG files. This vehicle panic alarm mechanism may be expected to provide a record of intruders, attackers or thieves inside the car, and provide graphics identification information as an aid to their arrest and conviction.

Accordingly, it is a principal object of the inventive disclosures made herein to provide a novel and useful automotive vehicle panic alarm system, one which overcomes the limitations of conventional vehicle security systems in the area of providing additional protection to the occupant(s) from assault, rape or car jacking while operating or occupying the automotive vehicle. Specifically, automotive vehicle panic alarm systems in accordance with embodiments of the disclosures made herein provide a vehicle panic alarm system that is easily activated from a plurality of alarm activation pushbutton locations when needed by the driver or occupant, generates an attention catching display of lights and sound that by design draws public attention to the vehicle, to the attacker and the assault in progress. Such automotive vehicle panic alarm systems are ideal use by all drivers in all vehicles and particularly in vehicles parked in public parking lots, operated alone at night in more crime prone urban areas, or operated by drivers that a potential attacker may consider to be an easy victim to target.

Any of the embodiments of the subject inventive disclosure for a vehicle panic alarm system can advantageously include a feature for remote triggering of the vehicle panic alarm from a conventional GSM cellular telephone. One preferred means of implementing this feature is by use of the short range Blue Tooth wireless technology present in many current generation GSM cellular telephones, and by use of a special cellular network loadable Java applet. Java is a programming language originally developed by Sun Microsystems. The Java applet designed to be loaded to memory on a convention cellular telephone, in a similar manner to the way JAVA applet games are loaded to cellular telephones. In on embodiment, the Java applet is loaded to the cellular phone by way on an alarm system purchaser calling a special phone number, providing the target cellular telephone number, and the system then downloading the Java applet directly to the cellular telephone through the cellular network. One might readily recognize this method as the same mechanism many cellular telephone system providers offer subscribers as a way to download graphics and games to cellular phones. Blue tooth is known to have a normal reliable range of at least 30 feet. A vehicle owner, when approaching their parked car perhaps in a dark parking garage, might encounter or observe a personal safety condition for which they may wish to remotely activate the vehicle panic alarm system. When within Blue Tooth communication range, the Java applet can be triggered from a menu on the cellular telephone, and the applet then triggers the vehicle alarm by initiating a Blue Tooth connect request with the appropriate alarm password provided as the 'pair to device' request pair device name. Other Blue Tooth alarm trigger methods would be known to those skilled in the art and their use by those skilled in the art, and this disclosure it intended to cover such alternate vehicle panic alarm trigger methods as may be defined using Blue Tooth and a Java applet running on a cellular telephone.

It is another object of the inventive disclosures made herein to provide a vehicle panic alarm system that may be easily retrofitted into any existing automotive vehicle.

It is another object of the inventive disclosures made herein to provide a vehicle panic alarm system that is designed to take full advantage of national emergency call systems, such as (in the example of the United States) the Federal Communications Commission's (FCC) Enhanced 911 (E911) standard, and provide vehicle location to emergency call dispatchers using the features of the E911 or similar standard.

It is another object of the inventive disclosures made herein to provide a vehicle panic alarm system equipped with digital cameras and image recording as well as transmission means. The alarm system can be configured so that in an alarm condition the cameras periodically capture pictures of the drivers and vehicle occupants, store the picture to a local MMC memory card (same as used in digital cameras) and optionally transmit the pictures over the wireless network to a user configured set (one or more) of cellular numbers using cellular GSM multi media messaging capabilities. The MMC card is removable and designed to hold a graphic record of the attack in a digital picture format, such as TIFF or JPEG files. This vehicle panic alarm mechanism may be expected to provide a record of intruders, attackers or thieves inside the car, and provide graphics identification information as an aid to their arrest and conviction.

It is another object of the inventive disclosures made herein to provide a vehicle panic alarm system that provides for remote triggering of the alarm from a vehicle driver's cell phone using Blue Tooth wireless communication and a custom Java applet loadable to a GSM cellular telephone.

It is another object of the inventive disclosures made herein to provide a vehicle panic alarm system that in certain embodiments incorporates a means for voice activation of the panic alarm system, wherein a spoke alarm phrase is configured into the alarm system by a person digitally recording the spoken phrase, and wherein the alarm phrase, when detected by the alarm system, triggers the panic alarm system into alarm state.

It is another object of the inventive disclosures made herein to provide a vehicle panic alarm system that interfaces with the cellular phone network and provides voice synthesis to notify police authorities of an emergency situation and, in certain embodiments, to provide GPS coordinates to the police locating the vehicle under attack, thereby allowing the police to be directly dispatched to the location to abort the attack or render assistance.

It is another object of the inventive disclosures made herein to provide a vehicle panic alarm system that does not disable the ignition of the car when activated, thereby allowing the driver to operate the vehicle to escape the attacker so as to abort the confrontation.

These and other objects of the invention disclosed herein will become readily apparent upon further review of the present specification and associated drawings.

### BRIEF DESCRIPTION OF THE DRAWINGS

The drawings show a form of the invention that is presently preferred, however the invention is not limited to the precise arrangement shown in the drawings.
FIG. 1 is an isometric view of an example enclosure and physical case form of one embodiment of the vehicle panic alarm system in accordance with the inventive disclosures made herein.
FIG.2 is an isometric view of an example enclosure of one embodiment of the vehicle panic alarm system in accordance with the inventive disclosures made herein. The enclosure base, mounted circuit board and enclosure cover.
FIG. 3 is a partial schematic, partial block diagram of devices interfaced to an embodiment of the vehicle panic alarm system in accordance with the inventive disclosures made herein.
FIG. 4 is block diagram of circuitry of an embodiment of the vehicle panic alarm system in accordance with the inventive disclosures made herein, illustrating by functional blocks the active components of one embodiment of the panic alarm system and connection to external devices.
FIG.5 and FIG 6. are flow charts of a method of creating a vehicle localized audio and visual alert of an alarm condition, and of notifying authorities of the emergency alarm and vehicle location.
FIG. 7 is a front view of a vehicle equipped with an embodiment of the vehicle panic alarm system accordance with the inventive disclosures made herein.

### DETAILED DESCRIPTION OF THE DRAWINGS

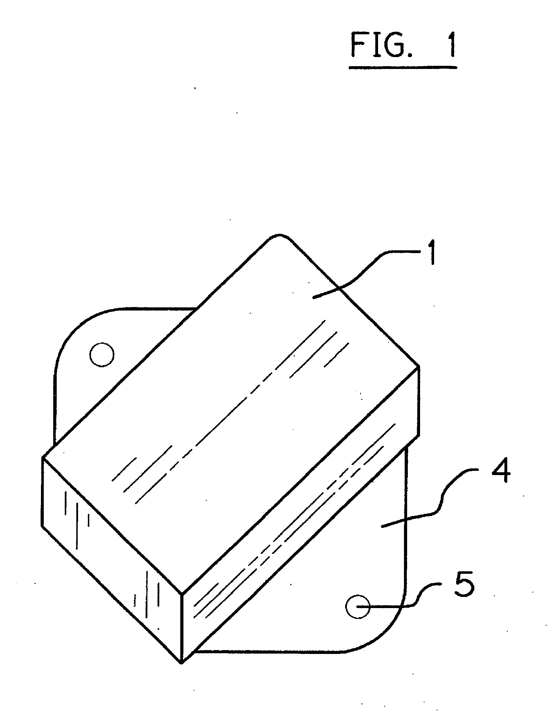

FIG. 1 depicts the general housing appearance of one particular example of an automotive vehicle panic alarm system in accordance with an embodiment of the inventive disclosures made herein. The automotive vehicle panic alarm system enclosure assembly 1, as depicted, has a generally rectangular form. The major width and length dimensions are selected to accommodate a circuit board contained within, and in certain embodiments the cellular telephone compatible transceiver circuitry. The height of the enclosure assembly is selected to accommodate the mounted height of the circuit board and components in the enclosure including circuit board stand offs and component heights on the circuit board. The enclosure has a base which include one or more mounting tabs 4, each tab having one or more mounting holes 5, the holes provided to secure the panic alarm module under the dashboard, against the firewall or on any other desired mounting position on the automotive vehicle. Those skilled in the art will readily realize that other well-known enclosure configurations can be applied to enclose the panic alarm circuitry without deviating from the intention of this disclosure.

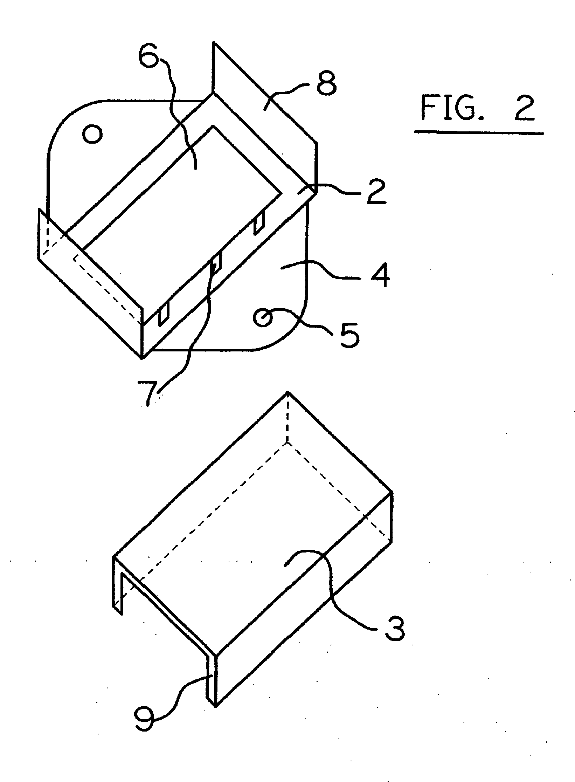

Referring now to FIG. 2, the enclosure assembly 1 of this particular example of a simple first embodiment of an automotive vehicle panic alarm system comprises an enclosure base 2 and a U-formed removable housing cover 3. The housing cover is depicted as removed from the enclosure base for better understanding of the interior of the enclosure. Within the enclosure is an electronic circuit board 6, which is secured to the enclosure base 2 by a plurality of tubular mounting standoffs 7. Not shown but understood is a plurality of machine screws protruding through the circuit board into threads in the standoffs, and additional screws protruding through the enclosure based and into the opposing ends of the standoffs, such as to securely mount the circuit board to the enclosure base. In the illustrated example enclosure, the U-channel removable housing cover 3 is placed onto the enclosure base 2 by pressing the housing cover directly down over and in end to end alignment with the semi flexible end tabs 8. The end tabs are flexed slightly inwards towards the center of the enclosure during cover alignment and insertion. The end tabs are released to flex outwards and provide a thrust force against the bent retaining edges 9 of the cover 3. Again, those skilled in the art will readily realize that other well-known enclosure configurations can be applied to enclose the panic alarm circuitry without deviating from the intention of this disclosure. This exemplary enclosure is provided as an aid to enablement and understanding of one embodiment of the disclosure presented herein.

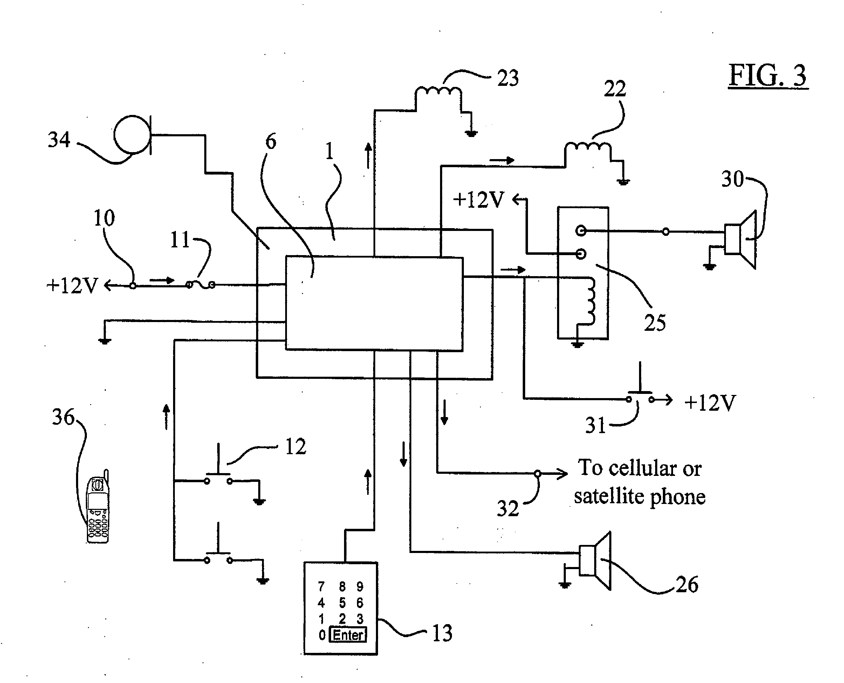

FIG. 3 depicts a partial schematic, partial block diagram of devices interfaced to an embodiment of the vehicle panic alarm system in accordance with the inventive disclosures made herein. Circuit board 6 is provided in enclosure 1. Power supply wiring 10 runs from the vehicle electrical system to the circuit board 6, to provide power for the panic alarm system components. The +12VDC side of the wiring includes an inline bayonet or other form fuse 11 to protect the electrical system and the alarm components against a possible short circuit condition. The panic alarm circuit board includes an input 12 for one or more alarm activation switches or pushbuttons. As envisioned, a plurality of these pushbuttons may be electrically connected or wired in parallel (as shown). The alarm activation signal in this embodiment is active low, which is to say the alarm activation line is pulled to vehicle ground when an alarm activation pushbutton is depressed. The alarm activation push button or pushbuttons are envisioned to be momentary contact type. The alarm activation signal can alternately be generated by a human speaking the configured alarm activation phrase within the vicinity of a panic alarm pickup microphone 34. Alternately a Blue Tooth equipped mobile device, such as a GSM cellular telephone having Blue Tooth capabilities can be used to remotely trigger an alarm activation signal to the panic alarm over a short distance, with a range of approximately 30 feet. The alarm condition is latched by the logic circuitry on the circuit board until the alarm is cancelled by the vehicle driver entering the proper numeric security pass code on the alarm cancellation keypad 13. The alarm can not be cancelled unless the proper security code is entered. The keypad may be mounted or hidden anywhere desired within the vehicle. The panic alarm circuit board provides several output, including vehicle +12VDC to the actuate and flash vehicle courtesy or marker lights 23, another output of +12VDC to drive and flash the vehicle headlights 22, a 12VDC lower current output intended to actuate and cycle the vehicle horn relay 25 on and off. Another +12VDC output is provided to continuously power an optional vehicle mounted siren. The siren may be mounted, for example, in the engine compartment where it is hidden from view. Additionally an output is provided for emergency services notification 32 to an integrated o separately interfaced cellular telephone device. This feature is discussed further below. The voltage potentials illustrated are for a negative ground, 12volt vehicle electrical system. In the case of a positive ground system the voltage polarities are reversed from what is illustrated in the above discussion. In the case of a different vehicle electrical system, say a 42 volt system used in certain vehicles, the references to 12 volts would be changed to 42 volts. Implementation of the panic alarm system in accordance with these inventive disclosures is not dependent on the type of vehicle electrical ground (positive or negative), nor on the vehicle electrical system or battery voltage.

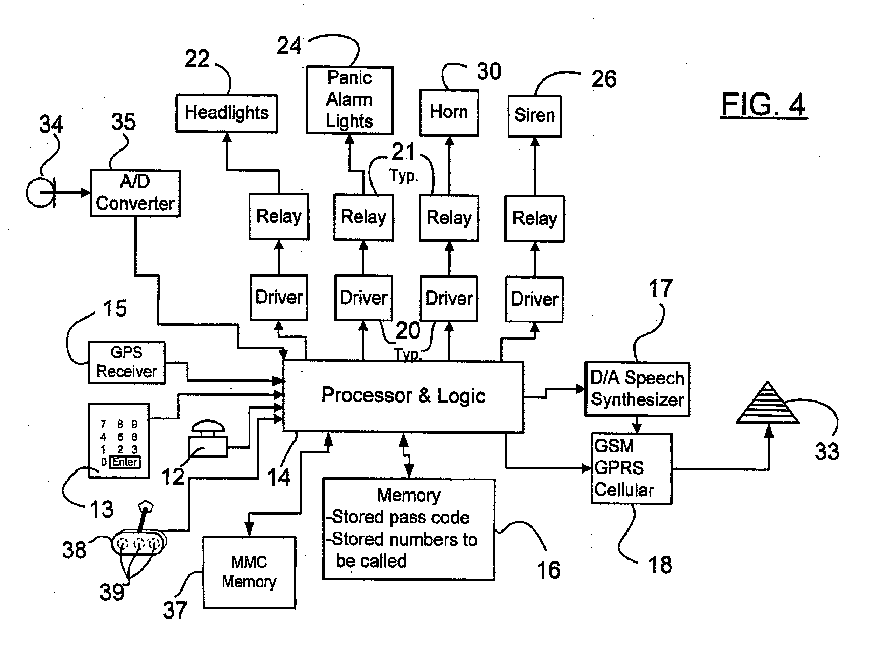

FIG. 4 is block diagram of circuitry of an embodiment of the vehicle panic alarm system in accordance with the inventive disclosures made herein, illustrating by functional blocks the active components of one embodiment of the panic alarm system and connection to external devices. The active components of the panic alarm system include a processor and logic system 14, board mounted relays to drive external visual and audible alarm devices and semiconductor drivers which interface low level digital outputs from the processor and logic to the higher current levels required to drive the coils of the output relays. In at least one embodiment, the panic alarm system includes a GPS (Global Positioning System) receiver 15, which provides vehicle global position coordinates to the processor and logic system. On-board non-volatile memory 16 provides storage for parameters including user selected alarm cancellation security numeric pass code, phone numbers the panic alarm system is to call in the event of an emergency (such as for police and security services), configured alarm activation phrase for alarms having voice alarm state activation cababilities, as well as other parameters. A MMC memory card or removable flash memory card is provided in certain embodiments, providing storage for periodically acquired CCD camera images of the driver seat, driver widow, passenger seat and rear vehicle areas, these images acquired and stored to removable flash memory card during an alarm condition. In one configuration, one to three CCD camera devices 39 are hidden within a vehicle rear view mirror assembly 38, the CCD camera's concealed behind a one way mirrored glass plate, the CCD cameras angled and positioned to capture images inside and outside the vehicle. A digital speech synthesizer 17 provides its output to either an integrated GSM cellular device 18, or to an external user provided cellular telephone, configuration depending on the embodiment chosen. In the case of the integrated cellular network GSM device 18, in an alarm condition the processor and logic system 14 dials emergency numbers previously configured by the owner in memory 16. Once the telephone at the called number answers, the processor and logic system sends an emergency voice message as well as the vehicle coordinates from the GPS system 15 to the speech synthesizer 17. The speech synthesizer 17 then feeds its synthesized human voice message to the called party. The message repeats for a pre-configured limited time, or until the person called hangs up. Once the call terminates or repeat cycle ends, the processor and logic system selects the next configured phone number from memory, and repeats the above with this new number. This process continues, configured telephone number to number, call to call, until the alarm is deactivated. During an alarm condition, the processor and logic module generate outputs to the semiconductor driver components 20. The drivers provide higher current outputs to drive the relays 21. The relays provide higher current capacity interface points to drive the vehicles headlights 22, marker lights 23, panic alarm lights 24 , horn relay 25 and optionally the siren 26. Once the alarm is activated by a driver or occupant actuating one of the alarm activation switches, activating from a mobile device via Blue Tooth, or using a voice alarm activation, then all outputs are cycled on and off using a pseudo random sequence with the exception of the siren 26 which remains continuously on during the alarm. The alarm deactivates with the driver or another person enters the correct configured numeric security code into the alarm cancellation keypad.

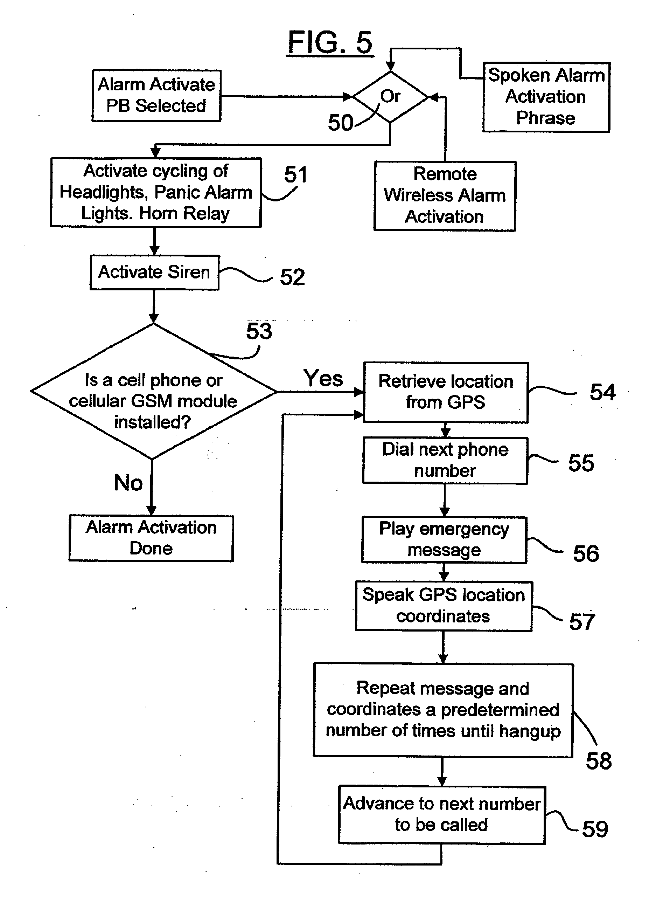

FIG. 5 is a flow chart of the events that occur when the panic alarm is activated. The alarm is activated when a driver or passenger actuates any of the alarm activation switches 50 mounted in the vehicle, or when the alarm is remotely activated via a wireless device such as a blue tooth equipped cellular phone, or when a person speaks the configured alarm activation phrase. In the case of alarm activation switches the switches are envisioned as momentary contact pushbuttons, placed within convenient reach where desired inside the vehicle cockpit. Once the panic alarm is activated, the panic alarm system initiates on/ off cycling 51 of the vehicle headlight, the vehicle panic alarm lights (if present), the vehicle marker lamps, and the horn relay. This on/off cycling continues until the alarm system is deactivated. The panic alarm system then activates the siren 52 (if present). The siren remains in a continuously on state until the alarm system is deactivated. A check is made if a cellular phone or GSM phone module is installed 53. If a cellular device is present and connected, the panic alarm system retrieves the vehicle location coordinates from the GPS system 54, if the alarm has a GPS receiver, and then dials the next configured phone number to be dialed 55 from the panic alarm memory. One of the configured numbers to be dialed would be the official national emergency call number, such as 911 in the United States. When the phone answers, the emergency message is played 56, and the vehicle GPS coordinates are spoken 57 (if available) via the voice synthesizer into the cellular call connection. The message is repeated a predetermined number of times or until the party receiving the call hangs up 58. After the call completes the alarm system advances to the next stored phone number 59 and if all numbers have been dialed repeats from the first phone number. The process repeats at 54 by obtaining the current vehicle GPS location, calling the next number, playing the emergency message and providing vehicle coordinates. This process loop continues until the panic alarm condition is cleared. The vehicle location may be obtained by the emergency call receiving authorities by use the features of a national cellular emergency call system, such and the Enhanced 911 system in the United States, or similar systems in other countries. In certain embodiments including a GPS receiver in the panic alarm system, the vehicle coordinates may be provided to authorities directly from the panic alarm automatically generated synthesized human voice message containing the vehicle location is global coordinates as decoded from the integrated GPS receiver

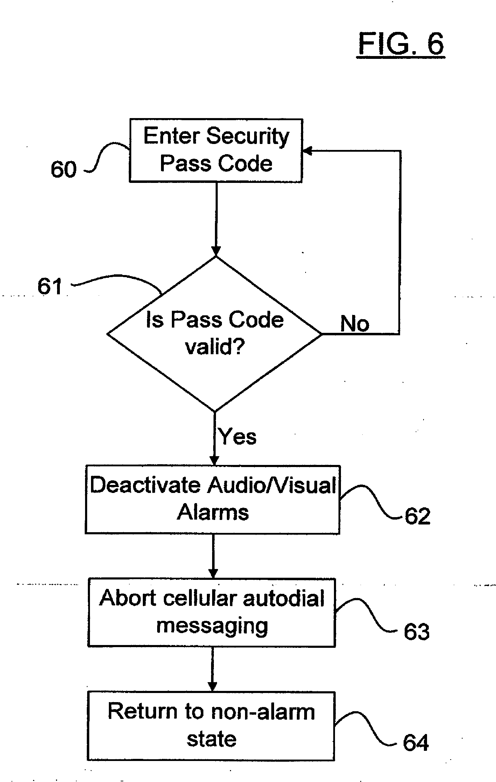

FIG.6 is a flow chart of the events that occur when the driver enters a pass code to deactivate the panic alarm system. The driver or occupant enters the pass code 60 on the alarm system keypad. If the pass code is invalid 61 the code is discarded and the alarm system waits for the next pass code attempt. If the entered pass code is valid 61, the panic alarm system proceeds to deactivate the audio, visual alarm outputs 62. If the vehicle is equipped with an interfaced cellular phone device, the cellular auto dialing message loop (54-59) is aborted 63. The panic alarm system is now deactivated and returns to the non-alarm state 64.

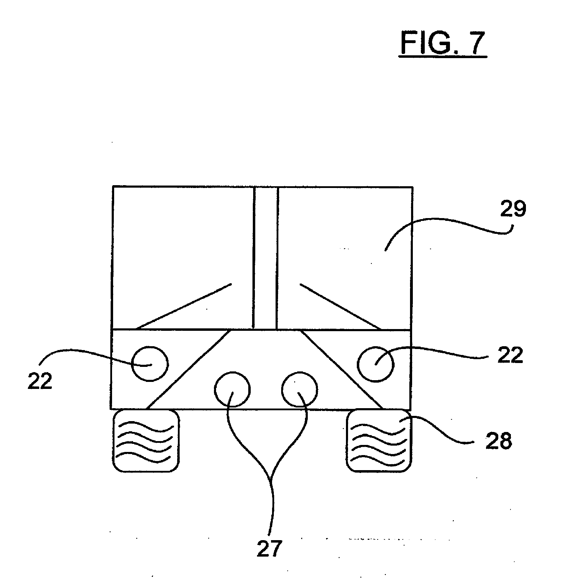

FIG. 7 is a front view of a vehicle equipped with an embodiment of the vehicle panic alarm system accordance with the inventive disclosures made herein, the illustrated vehicle including normal vehicle components such as headlights 22, tires 28, windshield 29. The front view illustrates the use of the optional panic alarm lights 27, in this case mounted beneath or near the grill. The panic alarm light are high intensity lights that will be cycled on and off during an alarm condition to draw attention to the attacker and help to thwart an attack.

In the preceding detailed description, reference has been made to the accompanying drawings that form a part hereof, and in which are shown by way of illustration specific embodiments in which the invention may be practiced. These embodiments and certain variants thereof, have been described in sufficient detail to enable those skilled in the art to practice the invention. It is to be understood that other suitable embodiments may be utilized and that logical, material, mechanical, software and electrical changes may be made without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A panic alarm system for interrupting criminal attacks against occupants of a motor vehicle, the system comprising:
a protective housing configured for mounting to a surface of the motor vehicle;
an electronic logic and control means mounted within said housing having:
one or more alarm activation inputs;
an alarm cancellation input; and
a plurality of digital alarm condition outputs controlled by said logic and control means, the outputs comprising:
an alarm condition output for pseudo randomly cycling vehicle courtesy lights between on and off;
an alarm condition output for pseudo randomly cycling vehicle headlights between on and off;
an alarm condition output for pseudo randomly cycling vehicle horn between on and off;
an alarm condition output for pseudo randomly cycling courtesy lights between on and off;
an alarm condition output for pseudo randomly cycling vehicle mounted panic alarm accessory lights between on and off; and
an alarm condition output for actuating a siren;
one or more alarm actuation switches electrically connected to said alarm activation input for placing the panic alarm in an alarm condition;
one or more alarm cancellation keypads for vehicle occupant to enter an alarm deactivation code to deactivate alarm condition, the keypad comprising:
a housing having a means for attaching to a surface within a vehicle cabin;
touch sensitive input keys mounted to a front face of said keypad housing, the keys comprising:
one key for each numeric digit in the set of 1,2,3,4,5,6,7,8,9,0; and
an enter key for indication completion of keyboard code input; and
a means for communicating input deactivation code key presses to the electronic logic and control means.

2. The panic alarm system of claim 1 further comprising one or more optional vehicle mounted panic alarm lights; and the logic and control means further comprises an alarm condition output for cycling the one or more optional vehicle mounted panic alarm lights between off and on states.

3. The panic alarm system of claim 2 further comprising:
a non-volatile memory secured within said protective housing and electrically interfaced to, addressable from, and exchanging data with said logic and control means;
a table of phone numbers stored in said non-volatile memory, the numbers to be dialed in an emergency by the panic alarm system to initiate emergency calls to authorities and emergency call dispatchers;
a microphone secured inside said alarm cancellation keypad for recording an emergency distress message to memory;
an analog to digital voice recording means electrically interfaced to said logic and control means and said microphone, the digital voice recording means for converting an emergency distress message spoken into the microphone into a digital bit stream for storage in said non-volatile memory;
a digital to audio speech synthesis means secured within the protective housing and interfaced to said logic and control means; and
a cellular telephone device cooperatively interfaced to said logic and control means, the cellular telephone configured for connecting to a cellular network to dial emergency numbers and transmit the emergency message to a configured emergency call recipient, wherein the alarm system is configured to provide emergency call dispatcher with vehicle location using a national emergency call system standard.

4. The panic alarm system of claim 3, further comprising a GPS receiver electrically interfaced to said logic and control means, the GPS receiver providing vehicle position in global positioning system world coordinates to said logic and control means.

5. The panic alarm system of claim 3, further comprising:
one or more CCD digital cameras, said cameras mounted and concealed inside a vehicle rear view mirror behind one way mirrored glass, said cameras positioned to periodically capture images inside and around the vehicle during an alarm condition; and
a static memory card removably retained in and electrically interfaced to said logic and control means, the memory card to store periodically captured CCD camera images for later analysis by authorities for use in identification and conviction of attacker.

6. The panic alarm system of claim 5 wherein the panic alarm system is configured to transmit the CCD camera images to authorities over cellular network using cellular GSM cellular multimedia messaging capabilities of the cellular device and the cellular network.

7. The panic alarm system of claim 3, further comprising;
a short range wireless networking transceiver for receiving remote alarm activation commands from a mobile wireless device, said transceiver configured to provide alarm activation input into the alarm system.

8. The panic alarm system of claim 3, further comprising:
a means for digitally encoding and storing a user configurable spoken vocal alarm activation phrase into the non-volatile memory for later use in voice activation of the alarm system; and
a means for providing alarm activation by voice command comprising a means of receiving spoken sound, coding into digital impulses, comparing against the configured alarm activation phrase and providing alarm activation input to the alarm system when the voice alarm activation phrase is detected.

9. A method for a vehicle panic alarm system to thwart an attack against an motor vehicle occupant by calling attention to the attacker by use of bright visual lighting and a variety of loud audible means, the method comprising:
receiving an alarm activation command;
initiating pseudo random power on/ off cycling of vehicle headlights;
initiating pseudo random power on/ off cycling of vehicle panic alarm lights;
initiating pseudo random power on/ off cycling of vehicle courtesy lights; and
activating a vehicle mounted panic alarm siren.

10. The method of claim 9 wherein after the step of activating the siren, the steps further comprise:
retrieving vehicle location coordinates from a global positioning system receiver;
reading a next emergency phone number to be called from an emergency phone number list;
commanding a cellular telephone device to dial the next emergency number over a cellular network;
retrieving a recorded emergency distress voice message from a panic alarm memory device;
playing the recorded emergency voice message to an emergency cellular call recipient;
communicating the vehicle location coordinates to the cellular call recipient;
repeating the emergency voice message and vehicle coordinates;
terminating the cellular call; and
continuing at the above step of retrieving the vehicle location and repeating until alarm condition is cancelled by occupant.

11. The method of claim 10 wherein after the step of communicating the vehicle location, the steps further comprise:
recording CCD camera graphic images to a removable flash memory card in the alarm system.

12. The method of claim 11 wherein after the step of recording graphics images, the steps further comprise:
transmitting CCD camera images to call recipient.
